# EUROPÄISCHE PATENTANMELDUNG

(11) **EP 1 220 081 A2**
(43) Veröffentlichungstag der Anmeldung: **03.07.2002**
(21) Anmeldenummer: 01130413.6
(22) Anmeldetag: 20.12.2001
(51) Int. Cl.: G06F 1/16

(54) **Transportabler Kommunikationsrechner**

(30) Priorität: 21.12.2000 DE 20021842 U
(71) Anmelder: Feierbach, Wolfgang, 63674 Altenstadt (DE)
(72) Erfinder: Feierbach, Wolfgang, 63674 Altenstadt (DE)
(74) Vertreter: KEIL & SCHAAFHAUSEN

(57) **Zusammenfassung**

Ein transportabler Kommunikationsrechner in Taschenbuchform umfasst einen Rechnerteil (2) mit einem ersten Flachbildschirm (3) und Eingabemitteln (4), einen Mobiltelefonteil (9) mit einem zweiten Flachbildschirm (10) und Eingabemitteln (11) und eine digitale Kamera (15), wobei der Rechnerteil (2), der Mobiltelefonteil (9) und die Kamera (15) elektronisch miteinander vernetzbar und/oder kombinierbar sind.

## Beschreibung

Die Erfindung betrifft einen transportablen Kommunikationsrechner in Taschenbuchform.

Heutige Büro-Computer und die kleineren Notebook-Computer arbeiten im Wesentlichen mit Prozessoren, RAM-Speicher, Festplattenspeicher und Wechselmediumspeicher. Die Bauformen solcher Computer sind relativ groß, schwer und verbrauchen viel Energie. Die allgemeine Entwicklung geht daher in Richtung kleinerer Computer-Einheiten.

So ist aus der EP 0 750 245 A1 ein Kleinrechner in Notizblockform bekannt, welcher einen mittels eines elektrischen Eingabestiftes bedienbaren kombinierten Ein- und Ausgabeflachbildschirm aufweist, der auf der Deckelfläche eines flachen rechteckförmigen Rechnergehäuses innerhalb eines Flachrahmens befestigt ist. Mit einer Kante des Rechnergehäuses ist ein den flachen Bildschirm abdeckender Klappdeckel schwenkbar verbunden, wobei eine Schwenkachse als rohrförmige Gelenkachse gestaltet und zur Aufnahme einer mit einem Schwanenhals versehenen Videokamera dient. Die Dateneingabe erfolgt jedoch auf andere Weise als bei herkömmlichen Rechnern, so dass sich der Benutzer erst umgewöhnen muss. Auch verdecken der Eingabestift und die Hand des Benutzers beim Dateneingeben einen Teil des Bildschirms. Weiterhin nachteilig ist, dass die Datenausgabe auf einem Ausgabebildschirm erfolgt, dessen nutzbarer Platz noch dadurch eingeschränkt wird, dass er gleichzeitig als Eingabemittel Verwendung findet. Diese Problematik macht sich insbesondere bemerkbar, wenn beispielsweise Videokonferenzen mit mehreren Gesprächspartnern abgehalten werden sollen.

Es ist daher eine Aufgabe der vorliegenden Erfindung, einen tragbaren Kommunikationsrechner bereitzustellen, welcher eine effektive Nutzung und eine ergonomische Dateneingabe erlaubt.

Diese Aufgabe wird im wesentlichen mit den Merkmalen des Anspruchs 1 gelöst durch einen Rechnerteil, welcher einen ersten Flachbildschirm und Eingabemittel aufweist, einen Mobiltelefonteil, welcher einen zweiten Flachbildschirm und Eingabemittel aufweist, und eine digitale Kamera, wobei der Rechnerteil, der Mobiltelefonteil und die Kamera elektronisch miteinander vernetzbar und/oder kombinierbar sind. Erfindungsgemäß ist dem Rechnerteil und dem Mobiltelefonteil jeweils ein Flachbildschirm und jeweils zumindest ein separates Eingabemittel zugeordnet, so dass eine ergonomische Dateneingabe möglich ist. Die Erfindung erlaubt ferner eine Vernetzung oder Kombination von Rechnerteil und Mobiltelefonteil, so dass bspw. im Rahmen einer Videokonferenz mit zwei Gesprächspartnern eine Anzeige eines Gesprächspartners auf dem Flachbildschirm des Rechnerteiles und die Anzeige eines anderen Gesprächspartners auf dem Flachbildschirm des Mobiltelefonteiles erfolgen kann.

In weiterer Ausgestaltung der Erfindung ist vorgesehen, dass der Rechnerteil und der Mobiltelefonteil jeweils verschwenkbar an einem Gehäuse für die Kamera angelenkt sind. Diese Bauweise erlaubt eine platzoptimierte und flache Bauweise.

Gemäß einer besonders bevorzugten Ausführungsform ist die Kamera um eine Achse drehbar an dem Gehäuse angeordnet, so dass dem Betrachter unterschiedliche Motive gezeigt werden können, ohne den Rechner selbst bewegen zu müssen.

In weiterhin vorteilhafter Ausgestaltung der Erfindung weist der Rechnerteil wenigstens einen Mikroprozessor sowie Speicherbereiche für flüchtiges und Speicherbereiche für dauerhaftes Speichern auf, wobei die Speicherbereiche für flüchtiges Speichern einen größeren Speicherplatz aufweisen. Dies erlaubt eine miniaturisierte Bauweise bei minimalem Stromverbrauch, weil der Rechner lediglich ein Betriebssystem dauerhaft speichern muss und für unterschiedliche Anwendungen notwendige Programme oder Programmteile nur in dem flüchtigen Speicher ablegt. Dieser wird im Unterschied zu dem dauerhaften Speicher gegen Ende der Anwendung oder nach dem Ausschalten gelöscht.

Es ist vorteilhaft, wenn die Eingabemittel für den Rechnerteil und die Eingabemittel für den Mobiltelefonteil jeweils eine Tastatur aufweisen, so dass tastaturerfahrene Benutzer mit dem Rechner ohne Umgewöhnung arbeiten können.

Wenn die Tastatur zwei Tastengruppen aufweist, wobei eine erste Tastengruppe in Bezug auf eine Oberfläche versenkt angeordnet ist, und eine zweite Tastengruppe in Bezug auf die Oberfläche erhaben angeordnet ist, ermöglicht dies auch dem ungeübten Benutzer einen einfachen Umgang mit dem Rechner.

Wenn eine der Tastengruppen einen Ziffernblock aufweist, welcher dem Mobiltelefon zugeordnet ist, erlaubt dies die Verwendung des Ziffernblocks nicht nur für die Eingabe von Telefonnummern, sondern auch für die Durchführung von Rechenoperationen auf dem Rechnerteil. Es ist ferner vorteilhaft, wenn die Tastatur des Mobiltelefonteils Sonderfunktionstasten für bspw. die Aufnahme und die Wiedergabe mit der Kamera aufweist.

Weiterhin vorteilhaft ist, wenn die Eingabemittel jeweils eine Steuerfläche aufweisen, welche nach Art eines Touch-pad eine direkte Plazierung eines Cursors auf dem Bildschirm erlaubt.

Die Kombinierung oder Vernetzung der Flachbildschirme und/oder der Eingabemittel erweitert die Benutzungsmöglichkeiten. Weil beispielsweise das Mobiltelefonteil einen Ziffernblock aufweist, kann dieser für die rechnerseitige Dateneingabe herangezogen werden. Alternativ können der Textinhalt oder Internetseiten bei einer Vergrößerung von ca. 200 % auf beide Monitore verteilt werden. Auch kann an dem einen Monitor eine Anwendung und an dem zweiten Monitor eine zweite Anwendung angezeigt und über die Eingabemittel bedient werden.

Wenn in weiterhin vorteilhafter Ausgestaltung der Erfindung elektrische Steckbuchsen als Schnittstellen zur Verbindung mit externen Geräten vorgesehen sind, erlaubt dies bspw. die Verbindung mit externen CD-ROM- und DVD-Laufwerken, Festplatten, Druckern, Sensoren oder ähnlichen Geräten. Der Anschluss kann auch über Firewire EEE 1394, USB oder Kopfhörerverbindungen erfolgen.

Drahtlose Schnittstellen zu externen Geräten basieren auf Infrarot oder BlueTooth-Technik.

Wenn für die Verbindung zwischen Kamera, Rechnerteil und Mobiltelefonteil eine flexible gedruckte Schaltung Verwendung findet, erlaubt dies eine einfache und kostengünstige Bauweise. Gleichzeitig lässt sich die Größe des Rechners minimieren.

Eine elektronische Auswerteeinheit für die Kamera erlaubt eine autarke elektronische Bildverarbeitung, ohne den Rechnerteil in Betrieb nehmen zu müssen.

Die Stromversorgung erfolgt vorzugsweise mittels Akkumulatoren, für die eine Ladeeinheit bereitgestellt ist, an die der Rechner mittels einer Anschlussbuchse anschließbar ist. Es ist dabei von Vorteil, wenn die Ladeeinheit gleichzeitig als Ständer für den Kommunikationsrechner dient.

Insbesondere wenn der Rechner für die Durchführung von Videokonferenzen verwendet werden soll, empfiehlt es sich, separate Schaltmittel und separate Anzeigemittel für die Synchronisierung der Videokonferenz, d.h. für die Synchronisierung des wechselseitigen Sprechens und Zuhörens vorzusehen.

Weitere vorteilhafte Ausgestaltungen der Erfindung ergeben sich aus der nachfolgenden Beschreibung eines Ausführungsbeispieles und der Zeichnung.

In der Zeichnung zeigt:
- Fig. 1: eine Ansicht eines Kommunikationsrechners im aufgeklappten Zustand,
- Fig. 2: eine Draufsicht auf den Rechner gemäß Fig. 1,
- Fig. 3: eine Seitenansicht von links,
- Fig. 4: eine Seitenansicht von rechts,
- Fig. 5: eine Ladestation in Seitenansicht,

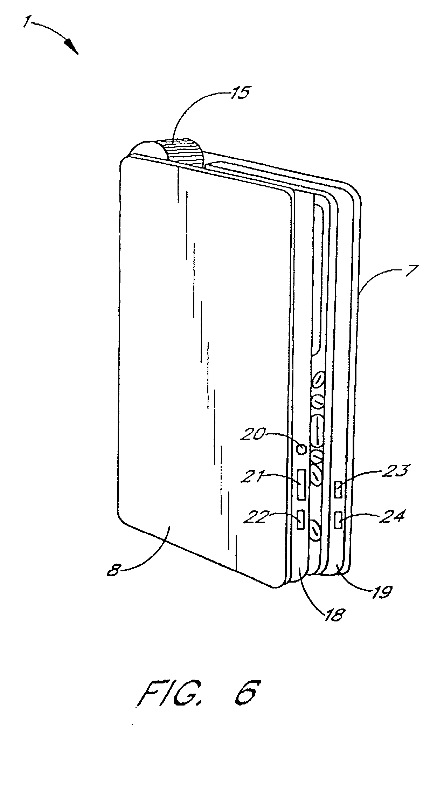

- Fig. 6: eine perspektivische Ansicht des Kommunikationsrechners im zusammengeklappten Zustand,
- Fig. 7: ein Betätigungsstift in Form eines Kugelschreibers, und
- Fig. 8: schematisch die Befestigung eines Kommunikationsrechners an einem Lenkrad.

Ein transportabler Kommunikationsrechner 1 von etwa der Größe eines Taschenbuchs verfügt über einen Rechnerteil 2 mit wenigstens einem in den Figuren nicht verdeutlichten Mikroprozessor und einem damit elektronisch verbundenen Flachbildschirm 3, der vorzugsweise auf LCD-TFT-Basis aufgebaut ist und eine Bilddiagonale von bspw. 3,5 Zoll aufweist. Der Rechnerteil 2 verfügt ferner über Eingabemittel 4, welche vorzugsweise eine Tastatur 5 für die tastaturgebundene Dateneingabe und eine Steuerfläche 6 zum direkten Manipulieren eines Cursors auf dem Flachbildschirm umfasst. Die Steuerfläche 6 ist vergleichbar einem sogenannten Touch-pad bei einem Laptop-Computer.

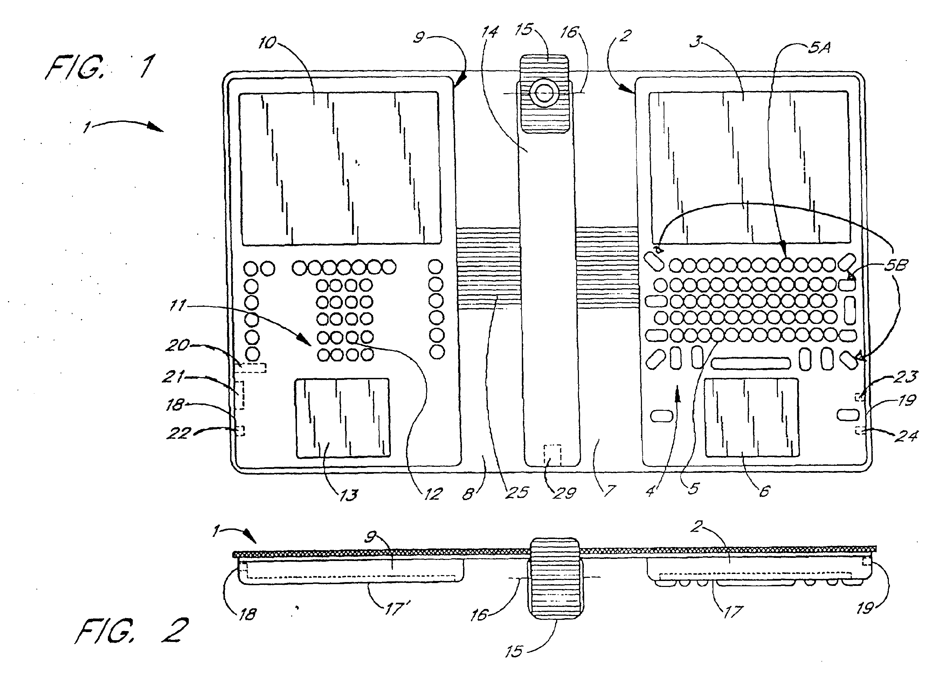

Wie der Fig. 1 zu entnehmen ist, befindet sich der Rechnerteil 2 auf der rechten Seite des Kommunikationsrechners 1 und ist in dem aufgeklappten Zustand von der Innenseite eines verschwenkbaren, bucheinbandartigen Klappdeckels 7 zugänglich. Auf der Innenseite eines linken Klappdeckels 8 befindet sich ein Mobiltelefonteil 9 mit einem Flachbildschirm 10 sowie zugeordneten Eingabemitteln 11, welche eine Tastatur 12 und eine Steuerfläche 13 umfassen. Selbstverständlich ist eine umgekehrte Anordnung (Rechnerteil 2 links, Mobiltelefonteil 9 rechts) denkbar. Das Telefon kann als Bildtelefon benutzt werden, basiert vorzugsweise auf der Breitbandtechnologie und entspricht insbesondere dem UMTS-Standard. Die Anordnung der Tastatur 5 entspricht einer herkömmlichen Rechnertastatur, während die Tastatur des Mobiltelefonteils 9 als Ziffernblock aufgebaut ist. In Übereinstimmung mit der Steuerfläche 6 dient die Steuerfläche 13 der unmittelbaren Positionierung eines Cursors auf dem Flachbildschirm und bspw. der unmittelbaren Anwahl eines ausführbaren Programms oder einer Telefonnummer. In den Figuren nicht verdeutlichte Spracherkennungsmittel erlauben die vollständige Bedienung des Kommunikationsrechners, insbesondere des Mobiltelefons 9, durch Sprachkommandos.

Mittig zu den beiden Klappdeckeln 7, 8 ist ein zentrales Gehäuse 14 vorgesehen, an dem eine digitale Kamera 15 um eine rechtwinklig zu der Schwenkachse der Klappdeckel 7,8 angeordnete Achse 16 verdrehbar angeordnet ist. Die Kamera 15 dient vorzugsweise als Videokamera, Stillbildkamera, kann auch als web-cam eingesetzt werden und ist vorzugsweise relativ zu dem Gehäuse 14 um bspw. 200° drehbar vorgesehen. Grundsätzlich handelt es sich um ein Objektiv von fester Brennweite, wobei auch Zoom-Objektive Verwendung finden können, ohne die Erfindung zu verlassen. Die Kamera 15 erlaubt im Zusammenhang mit dem telefonseitigen Flachbildschirm 10 die Wiedergabe eines Spiegelbildes des Benutzers. Wenn ein Bildtelefonat geführt wird, erscheint bspw. auf dem Flachbildschirm 10 jeweils das eigene Spiegelbild, und auf dem rechnerseitigen Flachbildschirm 3 das Bild des Gesprächspartners. Bei einer Konferenzschaltung mit mehreren Gesprächspartnern ist vorgesehen, dass der Flachbildschirm 3 jeweils das Bild des aktuell vortragenden Gesprächspartners ggf. unter Einblendung seines Namens zeigt. Für die Synchronisierung der Telefonkonferenz können Schaltmittel und ein entsprechendes Verfahren mit einer optischen Signalisierung der Sprecherlaubnis nach Art einer Ampelschaltung vorgesehen sein. Beispielsweise zeigt ein grünes Signal eine Sprecherlaubnis an, und ein rot/gelbes Signal symbolisiert ein Sperre. Für eine Wortmeldung muss beispielsweise gelb gedrückt werden. Die permanente Wiedergabe des Spiegelbilds erlaubt dabei die Kontrolle der eigenen Erscheinung.

Die Verschwenkbarkeit der Kamera 15 erlaubt es auch, ein Präsentationsobjekt auf der Rückseite des aufgestellten Kommunikationsrechners 1 zu platzieren und den Teilnehmern der Konferenzschaltung zu präsentieren. Hierbei lässt sich das Objekt unabhängig von dem Kommunikationsrechner anordnen und bspw. durch Beleuchtungseinrichtungen ins rechte Licht setzen.

Wie den Zeichnungen zu entnehmen ist, sind die Klappdeckel 7, 8 verschwenkbar zu dem Gehäuse 14 angeordnet, so dass sich der Kommunikationsrechner 1 nach Art eines Buchs zusammenklappen lässt, wobei sich die Eingabemittel 5, 12 und die Flachbildschirme 3, 10 geschützt im Inneren des Gerätes befinden.

Es versteht sich, dass der Rechnerteil 2 neben einem Mikroprozessor noch Speichereinheiten mit Speicherbereichen für flüchtiges und mit Speicherbereichen für dauerhaftes Speichern aufweist. Die Größe, d.h. die Aufnahmekapazität dieser Speicherbereiche ist vorzugsweise so ausgelegt, dass der flüchtige Speicher im Vergleich zu dem dauerhaften Speicher vielfach größer ausgebildet ist. Als Dauerspeicherplatz eignen sich bspw. sogenannte "Sony Memory-Sticks" oder gleichartige, für die Speicherung von essentiellen Teilen wie dem Computer-Betriebssystem sowie Namen, Daten, Uhrzeitadressen oder eine Finder-Oberfläche geeignete Speichermedien. Für umgangreichere Speicherprozesse tritt der Kommunikationsrechner über das Mobiltelefonteil 9 mit einem Internet-Provider in Kontakt und speichert dort nichtsensitive Daten. Sensitive, das heißt vertrauliche Daten werden nach Wunsch des Benutzers auf einem stationären Heimrechner (Basisrechner) oder an eine bestimmte e-Mail-Adresse geschickt. Der Kommunikationsrechner besitzt die Fähigkeit mit allen Betriebssystemen und Anwendungsprogrammen anderer (stationärer) Rechner zu kommunizieren. Zu bearbeitende Dateien können deshalb von dem Korrespondenzrechner zusammen mit dem für die Bearbeitung notwendigen Programmteil geladen, bearbeitet und an anderer Stelle gespeichert werden, ohne dass das gesamte Programm als solches auf dem Kommunikationsrechner dauerhaft gespeichert vorliegt. Dies ermöglicht die Bearbeitung von beispielsweise Terminkalendern, Reiserouten oder anderem und deren Speicherung auf dem Heimrechner.

Der Rechnerteil 2, der Mobiltelefonteil 9 und die Kamera 15 oder Bestandteile dieser Elemente sind elektronisch miteinander vernetzbar und/oder kombinierbar. Mit anderen Worten kann der Flachbildschirm 10 des Mobiltelefonteils 9 zusätzlich zu dem Rechnerflachbildschirm 3 für Rechnerzwecke benutzt werden und bspw. die im Rahmen von Multitasking in Abarbeitung befindlichen Daten eines anderen Programms wie Textverarbeitung, Grafiken oder Zeichnungen anzeigen. Es ist ferner denkbar, die beiden Flachbildschirme 3, 10 derart zusammenzuschalten, dass sie ein entlang einer Achse geteiltes Dokument gewissermaßen im Buchformat anzeigen. Ebenso können die Tastaturen 5, 12 oder die Steuerflächen 6, 13 einzeln oder zusammengeschaltet verwendet werden.

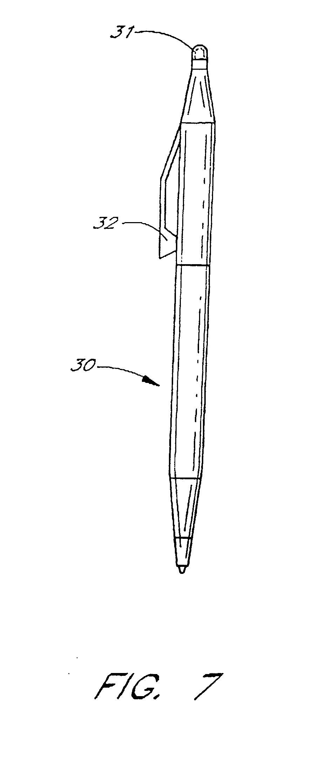

Wie insbesondere aus den Fig. 1 und 2 hervorgeht, weist die Tastatur 5 (und ggf. auch die Tastatur 12) des Rechnerteils 2 zwei Tastengruppen 5A, 5B auf, von denen eine erste, bspw. alphanumerische Tastengruppe 5A gegenüber einer Oberfläche 17 des Rechnergehäuse versenkt angeordnet ist, und eine zweite Tastengruppe 5B in Relation zu der Oberfläche 17 erhaben ausgeführt ist. Die beiden Tastengruppen verfügen somit über ein unterschiedliches Höhenniveau, so dass die einzelnen Tastengruppen einfach sowie ergonomisch ertastet werden können. Für die Betätigung der versenkt angeordneten Tasten des Ziffernblocks des Mobiltelefonteils 9 und der alphabetischen Tasten des Rechnerteils 2 wird vorzugsweise ein spezieller Betätigungsstift 30 in Form eines Kugelschreibers herangezogen, welcher ein halbkugelförmig abgerundetes Ende mit einer Leuchtdiode 31 aufweist (vgl. Fig. 7). Die Leuchtdiode 31 dient nicht nur der Betätigung der Tasten sondern signalisiert ferner durch ein optisches Signal einer LED einen eingehenden Telefonanruf. Die Übermittlung des Rufsignals erfolgt drahtlos über Bluetooth-Kurzstreckenfunk und ein Bluetooth-Chip steuert das Signal. Der Betätigungsstift 30 verfügt in seinem Schaft über einen Bluetooth-Empfänger und über eine Miniaturbatterie wie sie bspw. für die Stromversorgung von Hörgeräten Verwendung findet. Ein Clip 32 dient der Befestigung des Betätigungsstiftes 30 an einem Revers, einer Hemdentasche oder ähnlichem. Die erhaben angeordnete Tastengruppe 5B ist mit den Fingerkuppen betätigbar. Die Tastenanordnung ist unter ergonomischen Gesichtspunkten vorteilhaft, weil der Benutzer bei der Dateneingabe eine ausgeglichene Körperhaltung einnehmen kann. Es bietet sich an, insbesondere Sondertasten, die bei einer Bürotastatur mit der linken Hand bei Rechtshändern oder mit der rechten Hand bei Linkshändern ggf. zusammen mit Standardtasten bedient werden, also bspw. die Tab-Funktion, Großschreibung, STRG, CTRL, ALT und SPACE der erhabenen Tastengruppe zuzuordnen. Dadurch erhalten die Tasten einen weiten Abstand voneinander und lassen sich gut mit den Fingern bedienen, ohne aus Versehen Standard-Tasten zu berühren. Die Tastatur ist ferner gut von Links- und Rechtshändern zu bedienen, weil die erhabenen Tasten hinsichtlich jeder Funktion paarweise vorgesehen sind.

Wie der Fig. 1 zu entnehmen ist, verfügen die Eingabemittel 12 des Mobiltelefonteils 9 über unterhalb des Flachbildschirms 10 angeordnete Sonderfunktionstasten für eine Videorecorderfunktion. Mit diesen Tasten kann bspw. eine Videoaufzeichnung vorgenommen, abgespielt, vorgespult, zurückgespult oder unterbrochen werden. Selbstverständlich sind auch sonstige, grundsätzlich bekannte Videorecorderfunktionen umsetzbar. Um eine gut zugängliche Verbindung mit externen Geräten zu ermöglichen, sind auf Stirnflächen 18, 19 elektrische Steckbuchsen 20, 21, 22, 23, 24 vorgesehen, mit denen der Kommunikationsrechner 1 an externe Geräte wie insbesondere CD-ROM-Laufwerke, DVD-Laufwerke, externe Festplatten, Drucker, Sensoren, Temperaturfühler, externe Antennen, Telefonleitungen oder ähnliches anschließbar ist.

Für eine vereinfachte drahtlose Kommunikation des Kommunikationsrechners 1 mit anderen Geräten oder mit einem zugeordneten stationären Heimrechner können drahtlose Schnittstellen auf Infrarotbasis oder auf Basis der sogenannten "BlueTooth-Technik", d.h. unter Verwendung von Funkwellen eingesetzt werden.

In Fig. 1 ist als Verbindung zwischen dem Rechnerteil 2 und dem Mobiltelefonteil 9 eine flexible gedruckte Schaltung 25 schematisch dargestellt. Auch für die Vernetzung dieser beiden Teile mit der Kamera kann eine nicht weiter verdeutlichte flexible gedruckte Schaltung eingesetzt werden. Dies erlaubt eine vereinfachte und kostengünstige Bauweise, weil flexible gedruckte Schaltungen einfach mit elektronischen Bauteilen wie bspw. Prozessoren bestückt werden können. Wenn die Kamera 15 mit einer eigenständigen elektronischen Auswerteeinheit bestückt ist, kann eine Bildbearbeitung ohne Beanspruchung des Rechnerteils 2 erfolgen.

Für eine netzunabhängige Stromversorgung wird ein (oder mehrere) Akkumulator herangezogen, welcher innerhalb des Gehäuses 14 anordnbar ist und der Versorgung aller elektronischen Bauteile dient.

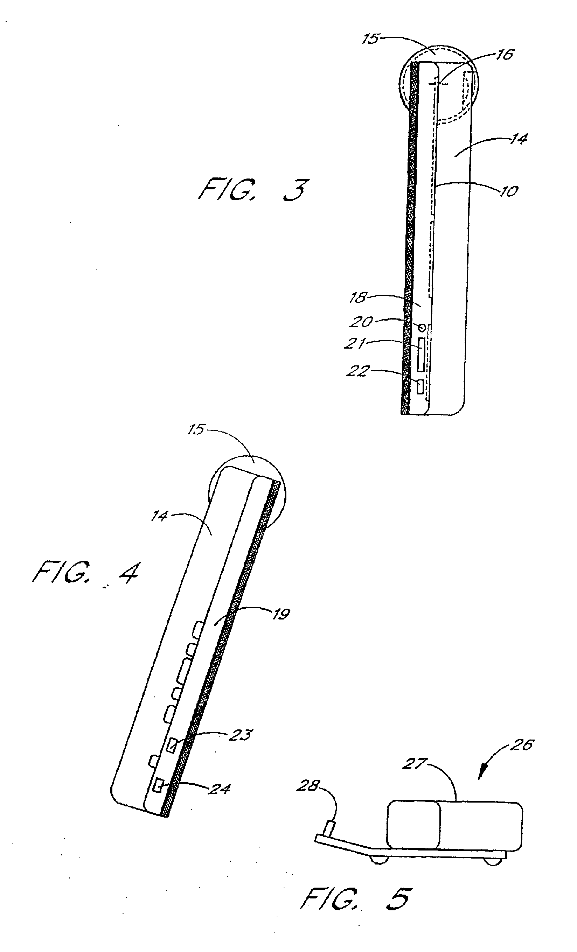

Aus Fig. 5 geht ein Ständer 26 in Kombination mit einem Netzteil 27 für den Kommunikationsrechner 1 hervor, welcher über einen elektrischen, stiftförmigen Kontakt 28 zum elektrischen Eingriff in eine Buchse 29 des Kommunikationsrechners 1 verfügt. Das Netzteil 27 kann sowohl einen Ladestrom für den Akkumulator als auch einen Betriebsstrom für den Rechner 1 bereitstellen. Selbstverständlich sind darüber hinaus benachbarte Steckbuchsen für eine Vernetzung mit einem stationären Heimcomputer denkbar. Im Ständer 26 lassen sich auch Ersatzakkus anordnen, die über das Netzteil 27 geladen werden.

Der Ständer 26 verschafft der Kamera 15 eine gute Aufnahmeposition für das Bildtelefon und kann auch in hier nicht dargestellter Weise als Leuchtenhalter zur guten Beleuchtung des Benutzers oder von der Kamera 15 zu erfassender Objekte dienen. Der Ständer 26 lässt sich bequem auf dem Schreibtisch des Benutzers anordnen und als Basisstation zum Arbeiten mit dem Kommunikationsrechner 1 und Aufladen der Akkumulatoren dienen.

Hierbei wird der Kommunikationsrechner 1 vorzugsweise leicht schräg von dem Ständer 26 gehalten, wie es in Fig. 4 angedeutet ist. So lässt sich die Zusammenschau der Fig. 4 und 5 auch als Explosionsdarstellung der erfindungsgemäßen Einheit des Rechners 1 und Ständers 26 ansehen. Durch Abwinklung von Rechner und Mobiltelefonteil kann der Kommunikationsrechner 1 aber auch ohne Ständer stehen.

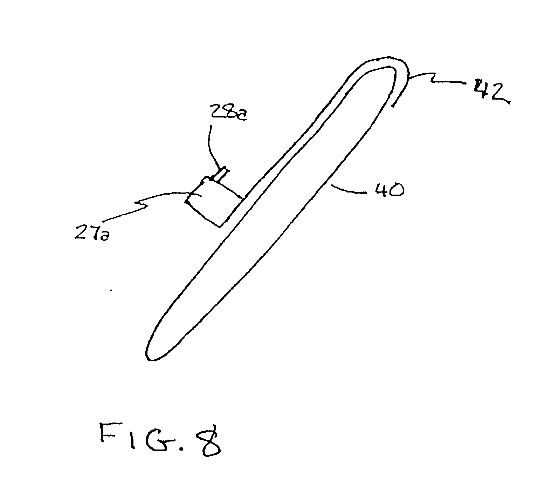

Wie sich aus Fig. 8 ergibt, kann der Kommunikationsrechner 1 auch über eine Klammer 42 gehalten und bspw. an einem Lenkrad 40 eines Automobiles befestigt werden, um eine Nutzung im Fahrzeug zu erleichtern. Hierbei kann ausgenutzt werden, dass die Höhe und Neigung des Lenkrades 40 üblicherweise für die Durchführung von Videokonferenzen geeignet ist. In der Halteklammer 42 kann ein Ladegerät oder Netzteil 27a und ein Kontakt 28a zum Anschluss an einen Videokonferenzcomputer vorgesehen sein.

### Bezugszeichenliste

- 1: Kommunikationsrechner
- 2: Rechnerteil
- 3: Flachbildschirm
- 4: Eingabemittel
- 5: Tastatur
- 5A, 5B: Tastengruppen
- 6: Steuerfläche
- 7,8: Klappdeckel
- 9: Mobiltelefonteil
- 10: Flachbildschirm
- 11: Eingabemittel
- 12: Tastatur
- 13: Steuerfläche
- 14: Gehäuse
- 15: Kamera
- 16: Achse
- 17: Oberfläche
- 18, 19: Stirnfläche
- 20 bis 24: Buchse
- 25: gedruckte Schaltung
- 26: Ständer
- 27: Netzteil
- 28: Kontakt
- 29: Buchse
- 30: Betätigungsstift
- 31: Signalmittel
- 32: Clip
- 40: Lenkrad
- 42: Klammer

## Patentansprüche

1. Transportabler Kommunikationsrechner in Taschenbuchform mit einem Rechnerteil (2), welcher einen ersten Flachbildschirm (3) und Eingabemittel (4) aufweist, mit einem Mobiltelefonteil (9), welcher einen zweiten Flachbildschirm (10) und Eingabemittel (11) aufweist, und mit einer digitalen Kamera (15), wobei der Rechnerteil (2), der Mobiltelefonteil (9) und die Kamera (15) elektronisch miteinander vernetzbar und/oder kombinierbar sind.

2. Transportabler Kommunikationsrechner nach Anspruch 1, **dadurch gekennzeichnet, dass** der Rechnerteil (2) und der Mobiltelefonteil (9) jeweils relativ verschwenkbar zu einem Gehäuse (14) der Kamera (9) angelenkt sind.

3. Transportabler Kommunikationsrechner nach einem der vorhergehenden Ansprüche, **dadurch gekennzeichnet, dass** die Kamera (15) um eine Achse (16) drehbar an dem Gehäuse (14) angeordnet ist.

4. Transportabler Kommunikationsrechner nach Anspruch 3, **dadurch gekennzeichnet, dass** die Achse (16) der Kamera (15) rechtwinklig zu den Schwenkachsen für den Rechnerteil (2) und den Mobiltelefonteil (9) angeordnet ist.

5. Transportabler Kommunikationsrechner nach einem der vorhergehenden Ansprüche, **dadurch gekennzeichnet, dass** dem Rechnerteil (2) wenigstens ein Mikroprozessor sowie Speicherbereiche für flüchtiges und Speicherbereiche für dauerhaftes Speichern zugeordnet sind, und dass die Kapazität der Speicherbereiche für flüchtiges Speichern größer ist als die Kapazität der Speicherbereiche für dauerhaftes Speichern.

6. Transportabler Kommunikationsrechner nach einem der vorhergehenden Ansprüche, **dadurch gekennzeichnet, dass** die Eingabemittel (4) für den Rechnerteil (2) und die Eingabemittel (11) für den Mobiltelefonteil (9) jeweils eine Tastatur (5, 12) aufweisen.

7. Transportabler Kommunikationsrechner nach einem der vorhergehenden Ansprüche, **dadurch gekennzeichnet, dass** die Tastatur (5) zwei Tastengruppen (5A, 5B) aufweist, wobei vorzugsweise eine erste Tastengruppe (5A) in Bezug auf eine Oberfläche (17) versenkt und die zweite Tastengruppe (5B) in Bezug auf die Oberfläche (17) erhaben angeordnet ist.

8. Transportabler Kommunikationsrechner nach einem der vorhergehenden Ansprüche, **dadurch gekennzeichnet, dass** die Flachbildschirme (3, 10) und/oder die Eingabemittel (4, 11) miteinander kombinierbar oder vernetzbar sind.

9. Transportabler Kommunikationsrechner nach einem der vorhergehenden Ansprüche, **dadurch gekennzeichnet, dass** Buchsen (20, 21, 22, 23, 24) oder drahtlose Schnittstelen zur Verbindung mit externen Geräten wie insbesondere CD-ROM-Laufwerken, DVD-Laufwerken, Festplatten, Drucker, Sensoren oder ähnlichem vorgesehen sind.

10. Transportabler Kommunikationsrechner nach einem der vorhergehenden Ansprüche, **dadurch gekennzeichnet, dass** eine flexible gedruckte Schaltung (25) für die Verbindung zwischen Rechnerteil (2) und Mobiltelefonteil (9) vorgesehen ist.

11. Transportabler Kommunikationsrechner nach Anspruch 18, **gekennzeichnet durch** einen Ständer (26), der der Halterung des Kommunikationsrechners (1) dient, wobei in dem Ständer (26) ein Netzteil (27) vorgesehen ist und ein an dem Ständer (26) angeformter Stift einen Kontakt bildet, der zur Stromversorgung in eine Buchse (29) des Kommunikationsrechners eingreift.

12. Betätigungsstift, insbesondere für die Tastaturbetätigung eines transportablen Kommunikationsrechners nach einem der Ansprüche 1 bis 11, **dadurch gekennzeichnet, dass** drahtlose Empfangsmittel für eine Telefonanrufsignalisierung, optische Signalmittel für die Rufsignalisierung und/oder eine Miniaturbatterie für die Stromversorgung vorgesehen sind.
